# EUROPEAN PATENT SPECIFICATION

(11) **EP 2 711 455 B1**
(45) Date of publication and mention of the grant of the patent: **15.12.2021**
(21) Application number: 13185320.2
(22) Date of filing: 20.09.2013
(51) Int. Cl.: D06F 58/04

(54) **Laundry treating apparatus**
WÄSCHEBEHANDLUNGSVORRICHTUNG
APPAREIL DE TRAITEMENT DU LINGE

(30) Priority: 21.09.2012 KR 20120105359
(43) Date of publication of application: 26.03.2014
(73) Proprietor: LG Electronics Inc., Seoul 07336 (KR)
(72) Inventor: Park, Deayun, 153-023 Seoul (KR); Kim, Taehyun, 153-023 Seoul (KR); Kang, Woohee, 153-023 Seoul (KR); Kim, Jongseok, 153-023 Seoul (KR)
(74) Representative: Vossius & Partner Patentanwälte Rechtsanwälte mbB

(56) References cited:
- EP-A1- 1 283 293
- EP-A1- 1 403 416
- EP-A2- 1 600 548
- DE-B1- 1 610 236
- KR-A- 20030 012 265

## Description

The present invention relates to an apparatus for treating laundry.

More particularly, the present invention relates to an apparatus for treating laundry for making a laundry treating capacity the largest.

The laundry treating apparatus means all kinds of apparatuses for managing or treating clothes, beddings and so on, such as washing, drying, crumple removal, and the like. In the laundry treating apparatus, there are a washing machine for separating dirt from the laundry using chemical decomposition by water and detergent, and physical action, such as friction, between the water and the laundry, a dryer for extracting water from wet laundry to dry the laundry, and a refresher for spraying heated steam to the laundry, to prevent allergy from causing by the laundry, as well as washing the laundry, conveniently.

In general, the dryer is a domestic appliance for drying washed laundry by using heated air. In general, the dryer has a drum which is rotated with the laundry held therein. Heated dry air is supplied to the drum which is rotating with the laundry held therein, and wet air is discharged from an inside of the drum. The dryer is required to secure a largest holding space of the drum for treating a large amount of the laundry at a time.

EP 1 600 548 A2 relates to a clothes dryer, and more particularly to a clothes dryer which can increase a capacity of a drum without increasing a size of a cabinet.

An object of an exemplary embodiment of the present invention is to provide a laundry treating apparatus which can make a holding space of a drum a largest.

Another object of exemplary embodiment of the present invention is to provide a laundry treating apparatus for making a laundry treating capacity a largest to provide a laundry treating apparatus which is convenient to use.

These objects are achieved by a laundry treating apparatus according to claim 1.

Additionally, the laundry treating apparatus further comprises an air discharge duct connected to the front supporter to guide the air discharged from an inside of the drum through the plurality of discharge holes and the front supporter.

The laundry treating apparatus possibly further comprises a fan mounted in the air discharge duct to move the air.

The laundry treating apparatus possibly further comprises a filter detachably arranged to the front supporter to filter the air discharged from the inside of the drum through the plurality of discharge holes.

Additionally, the laundry treating apparatus further comprises an air suction duct connected to the rear supporter to guide the air being supplied to the inside of the drum through the plurality of suction holes.

The laundry treating apparatus possibly further comprises a heater provided in the air suction duct to heat the air.

Additionally, the laundry treating apparatus further comprises a ring shaped front sealer located between the drum and the front supporter to provide a seal therebetween.

Additionally, the laundry treating apparatus further comprises a ring shaped rear sealer located between the drum and the rear supporter to provide a seal therebetween.

The drum front portion couples to a front of the drum center portion, and the drum rear portion couples to a rear of the drum center portion.

The drum front portion has a diameter smaller than a diameter of the drum center portion, and the drum rear portion has a diameter smaller than the diameter of the drum center portion.

The laundry treating apparatus possibly further comprises, a belt looped over the drum center portion, and a motor to provide a rotation force to move the belt.

The front supporter may include a front cover portion to surround the drum front portion, and the front cover portion possibly has a diameter larger than the diameter of the drum front portion and smaller than or the same as the diameter of the drum center portion.

The front cover portion may have a front hole formed therein to access the inside of the drum.

The rear supporter may include a rear cover portion to surround the drum rear portion, and the rear cover portion possibly has a diameter larger than the diameter of the drum rear portion and smaller than or the same as the diameter of the drum center portion.

Details of other embodiments are described in the detailed description of the embodiments and drawings.

The attached drawings illustrate exemplary embodiments of the present invention, provided for describing the present invention in more detail, but not for limiting technical aspects of the present invention.
FIG. 1 illustrates a perspective view of a laundry treating apparatus in accordance with an exemplary embodiment of the present invention.
FIG. 2 illustrates a longitudinal section of the laundry treating apparatus in FIG. 1.
FIG. 3 illustrates a partial exploded perspective view of the laundry treating apparatus in FIG. 1.
FIG. 4 illustrates a schematic perspective view of the laundry treating apparatus in FIG. 1 showing operation thereof.

Advantages, features and methods for achieving same will become apparent upon referring to embodiments which will be described in detail later together with the attached drawings. However, the present invention is, not limited to the embodiments disclosed hereafter, but can be embodied in different modes. The embodiments are provided to make scope of the present invention known to those skilled in this field of art completely, and the present invention is defined only by scopes of claims of the present invention. Throughout the specification, same reference number refers to same element.

The present invention will be described with reference to the drawings provided for describing a laundry treating apparatus in accordance with exemplary embodiments of the present invention.

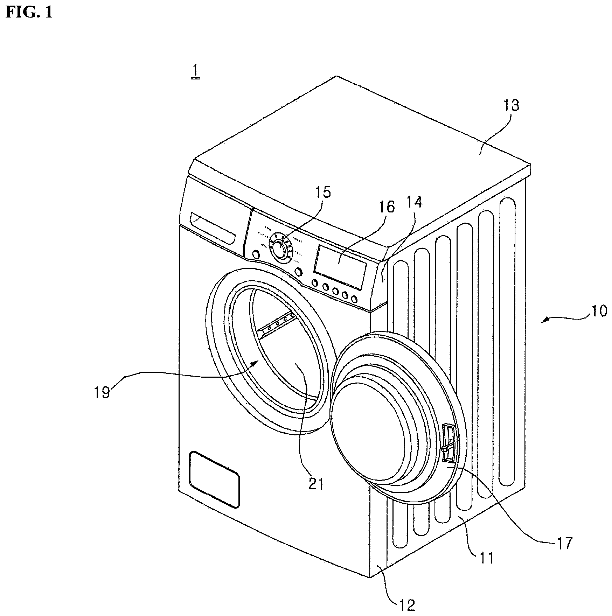

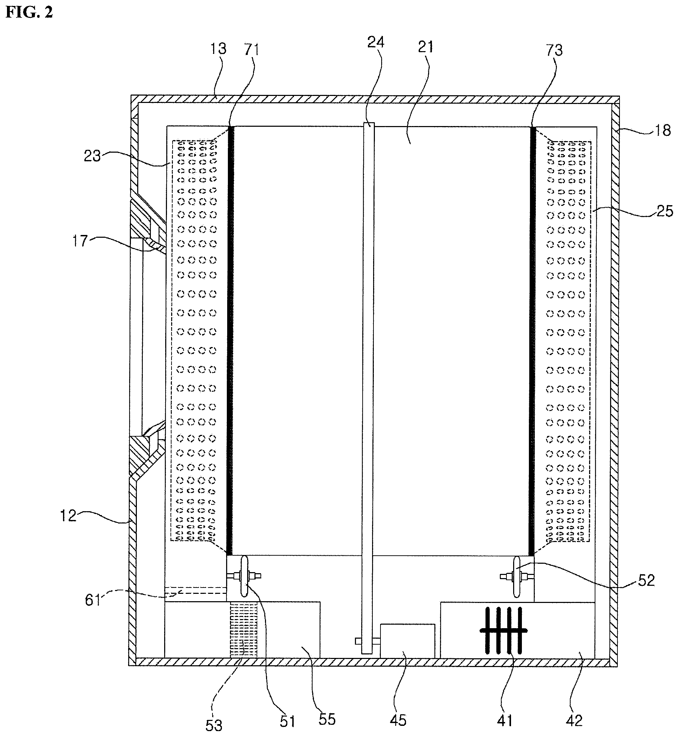

FIG. 1 illustrates a perspective view of a laundry treating apparatus in accordance with an exemplary embodiment of the present invention, and FIG. 2 illustrates a longitudinal section of the laundry treating apparatus in FIG. 1.

Referring to FIGS. 1 and 2, the laundry treating apparatus 1 includes a cabinet 10, and a drum 21 rotatably mounted in the cabinet 10 for holding laundry, such as clothes.

The cabinet 20 which forms an exterior appearance of the laundry treating apparatus 1 includes a cabinet body 11, a front cover 12 coupled to a front of the cabinet body 11 having an introduction hole 19 in a center portion thereof for allowing in/out of the laundry, a back panel 18 coupled to a rear of the cabinet body 11, a control panel 14 provided to a top side of the front cover, and a top cover 13 coupled to a top side of the cabinet body 11. Depending on embodiments, the cabinet body 11 and the back panel 18 may be formed as one unit by bending one panel.

The front cover 12 has a door 17 rotatably provided thereto for opening/closing the introduction hole 19, and the control panel 14 is provided with an input unit 15 for having different control orders on operation of the laundry treating apparatus applied thereto, and a display unit 16 for displaying different pieces of information on an operation state of the laundry treating apparatus.

The drum 21 has a cylindrical shape with opened front and rear. The drum 21 is arranged in the cabinet 10. The drum 21 is rotatably supported by a front supporter 23 and a rear supporter 25.

The drum 21 is rotated by a belt 24 which surrounds a circumference of the drum 21. A motor 45 provides rotating force for rotating the belt 24. The motor 45 may rotate, not only the belt 24, but also a fan 53, altogether.

The front supporter 23 supports a front end of the drum 21, rotatably. The front supporter 23, arranged in rear of the front cover 12, covers the front of the drum 21 which is opened, and surrounds a portion of a front end of a circumferential surface of the drum 21.

There is a ring shaped front sealer 71 arranged between the drum 21 and the front supporter 23. The front sealer 71 provides a seal between the drum 21 and the front supporter 23 enabling the drum 21 to rotate, smoothly. The front sealer 71 may be formed of a synthetic material having polytetrafluoroethylene (PTFE) oil percolated therein, fabric, or rubber.

The front supporter 23 has a front roller 51 provided thereto. The front roller 51 supports the drum 21 to be able to rotate, smoothly.

The front supporter 23 has discharge air flowing therethrough from an inside of the drum 21. The front supporter 23 has a filter 61 for filtering the air being discharged from the inside of the drum 21. The filter 61 is detachably arranged at a lower side of the front supporter 23.

The front supporter 23 is connected to an air discharge duct 55. The air discharge duct 55 has the air being discharged to the front supporter 23 flowing therethrough from the inside of the drum 21. The fan 53 is arranged in the discharge duct 55 for blowing the air. The fan 53 makes the air to move to an inside of the cabinet 10 from the inside of the air discharge duct 55. Depending on embodiments, the air discharge duct 55 may be connected to an outside of the cabinet 10 for making the air to flow to the outside of the cabinet 10 from the inside of the air discharge duct 55, or the air discharge duct 55 may be connected to an air suction duct 42 such that the air flows to the air suction duct 42 from the inside of the air discharge duct 55.

The rear supporter 25 rotatably supports a rear end of the drum 21. The rear supporter 25 is arranged in front of the back panel 18 for covering the opened rear of the drum 21 to surround a portion of a circumferential surface of the rear of the drum 21.

There is a ring shaped rear sealer 73 arranged between the drum 21 and the rear supporter 25. The rear sealer 73 provides a seal between the drum 21 and the rear supporter 25 for enabling the drum 21 to rotate, smoothly. The rear sealer 73 may be formed of a synthetic material having polytetrafluoroethylene (PTFE) oil percolated therein, fabric, or rubber.

The rear supporter 25 has a rear roller 52 provided thereto. The rear roller 52 supports the drum 21 to be able to rotate, smoothly.

The rear supporter 25 has air being supplied to the inside of the drum 21 flowing therethrough. The rear supporter 25 has the air suction duct 42 connected thereto. The air suction duct 42 heats the air being supplied to the inside of the drum 21 through the rear supporter 25. There is a heater 41 in the air suction duct 42 for heating the air. The air flows from the inside of the cabinet to the air suction duct 42. Depending on embodiments, the air suction duct 42 may be connected to the outside of the cabinet 10 for introducing the air from the outside of the cabinet 10 to the inside of the air suction duct 42, or the air suction duct 42 may be connected to the air discharge duct 55 for introducing the air being discharged to the air discharge duct 55 to the air suction duct 42.

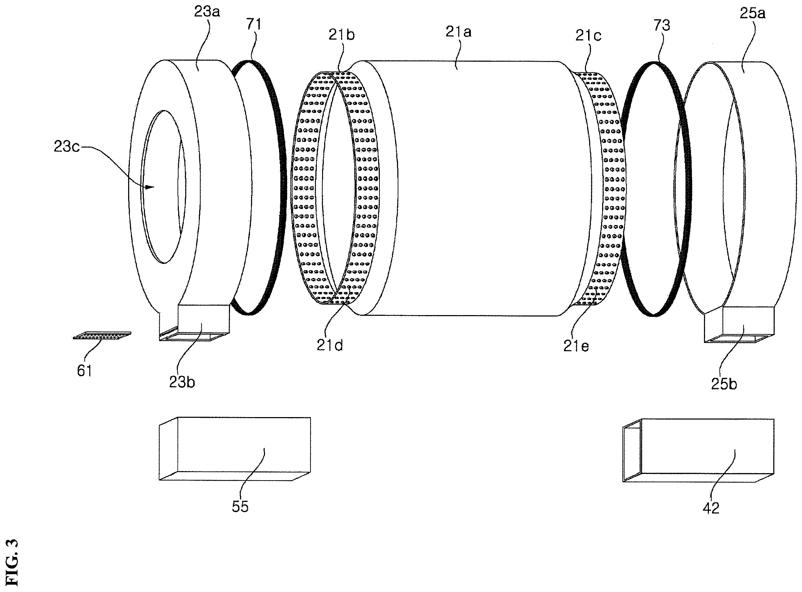

FIG. 3 illustrates a partial exploded perspective view of the laundry treating apparatus in FIG. 1.

The drum 21 includes a drum center portion 21a which forms a center portion of a circumferential surface of the drum 21, a drum front portion 21b which forms a front portion of the circumferential surface of the drum 21, and a drum rear portion 21c which forms a rear portion of the circumferential surface of the drum 21.

The drum center portion 21a is a center portion of the drum 21 having a cylindrical shape with opened both ends. It is preferable that the drum center portion 21a has a cylindrical shape with a fixed diameter. The drum center portion 21a holds the laundry. The belt 24 looped over the circumference of the drum center portion 21a. The drum center portion 21a is in contact with the front roller 51 and the rear roller 52. The drum center portion 21a has a front connected to the drum front portion 21b, and a rear connected to the drum rear portion 21c.

The drum front portion 21b couples to a front of the drum center portion 21a. The drum front portion 21b is a front circumferential surface of the drum 21, and has a plurality of discharge holes 21d formed therein for discharging the air from the inside of the drum 21. The drum front portion 21b has a diameter smaller than a diameter of the drum center portion 21a. The drum front portion 21b is surrounded by the front supporter 23. It is preferable that a front sealer 71 is arranged at a boundary of the drum front portion 21b and the drum center portion 21a.

The drum rear portion 21c couples to a rear of the drum center portion 21a. The drum rear portion 21c is a rear circumferential surface of the drum 21, and has a plurality of suction holes 21e formed therein for passing the air to the inside of the drum 21. The drum rear portion 21c has a diameter smaller than a diameter of the drum center portion 21a. The drum rear portion 21c is surrounded by the rear supporter 25. There is a rear sealer 73 arranged at a boundary of the drum rear portion 21c and the drum center portion 21a.

Depending on embodiments, the drum front portion 21b, the drum center portion 21a, and the drum rear portion 21c may be formed as one unit, or connected to each other by welding.

The front supporter 23 includes a front cover portion 23a which surrounds the drum front portion 21b, and a front connection portion 23b for connecting a lower side of the front cover portion 23a to the air discharge duct 55.

The front cover portion 23a of a circular cap shape surrounds the circumferential surface and a front of the drum front portion 21b. The front cover portion 23a surrounds the plurality of discharge holes 21d, for the air being discharged through the plurality of discharge holes 21d flows. It is preferable that the front cover portion 23a has a front in close contact with an end of the front of the drum front portion 21b, and an end of a rear in close contact with the front sealer 71. It is preferable that the front cover portion 23a has a diameter larger than a diameter of the drum front portion 21b, and smaller than or the same as a diameter of the drum center portion 21a.

The front cover portion 23a has a front hole 23c formed therein to access the inside of the drum 21. The front hole 23c is formed matched to the introduction hole 19 in the front cover 12, and opened/closed by the door 17.

The front connection portion 23b is connected to an underside of the front cover portion 23a for discharging the air flowing through the front cover portion 23a to the air discharge duct 55 through the front connection portion 23b. The front connection portion 23b has a filter 61 detachably provided thereto. The filter 61 has a face arranged perpendicular to an air flow direction. It is preferable that the filter 61 is drawable in a front direction of the front connection portion 23b.

The rear supporter 25 includes a rear cover portion 25a which surrounds the drum rear portion 21c, and a rear connection portion 25b which connects a lower side of the rear cover portion 25a to the air suction duct 42.

The rear cover portion 25a has a shape of a cylindrical cap to surround a circumferential surface and a rear of the drum rear portion 21c. The rear cover portion 25a surrounds a plurality of suction holes 21e, and has the air being supplied to the plurality of suction holes 21e flowing therethrough. It is preferable that the rear cover portion 25a has a rear in close contact with an end of the rear of the drum rear portion 21c, and a front end in close contact with the rear sealer 73. It is preferable that the rear cover portion 25a has a diameter larger than a diameter of the drum rear portion 21c, and smaller than or the same as a diameter of the drum center portion 21a.

The rear connection portion 25b is connected to an underside of the rear cover portion 25a such that the air being supplied from the air suction duct 42 to flow to the rear cover portion 25a through the rear connection portion 25b.

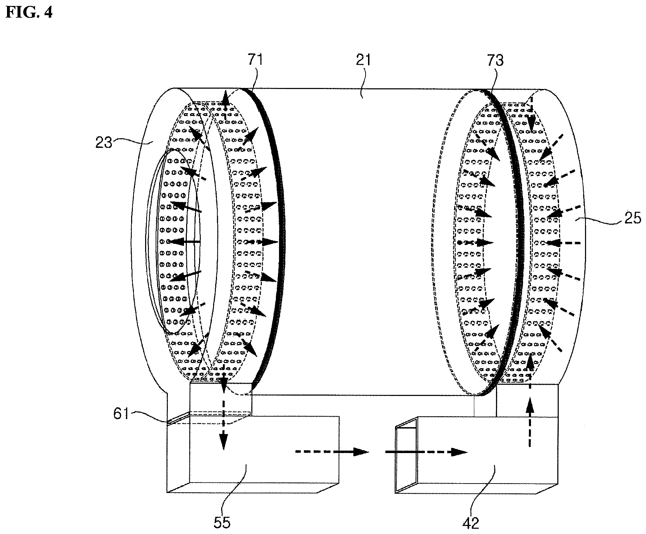

FIG. 4 illustrates a schematic perspective view of the laundry treating apparatus in FIG. 1 showing operation thereof.

Referring to FIG. 4, the operation of the laundry treating apparatus of the present invention will be described.

A user opens the door 17, and introduces the laundry to the inside of the drum 21 through the introduction hole 19 and the front hole 23c. The user closes the door 17, and starts drying by handling the input unit 15.

If the drying is started, the motor 45 is driven to move the belt 24, and the belt 24 rotates the drum 21. If the fan 53 rotated by the motor 45 or other driving unit, the air is discharged from the inside of the drum 21 through the plurality of discharge holes 21d in the drum front portion 21b, radially. The air being discharged in a centrifugal direction through the plurality of discharge holes 21d flows between the drum front portion 21b and the front cover portion 23a, and, therefrom, is guided to the front connection portion 23b. The air passing through the front connection portion 23b is filtered by the filter 61, and flows to the inside of the cabinet 10 through the air discharge duct 55. The air discharge duct 55 guides the air discharged from an inside of the drum 21 through the plurality of discharge holes 21d and the front supporter 23.

If the air flows to the air discharge duct 55 from the drum 21 by the fan 53, dropping a pressure in the drum 21, the air flows into the air suction duct 42. The air suction duct 42 guides the air being supplied to the inside of the drum 21 through the plurality of suction holes 21e.

The air introduced to the air suction duct 42 is heated by the heater 41. The air heated by the heater 41 thus flows to the rear cover portion 25a through the rear connection portion 25b of the rear supporter 25. The air introduced between the rear cover portion 25a and the drum rear portion 21c is supplied to the inside of the drum 21 through the suction holes 21e in a radial direction.

The heated dry air introduced to the inside of the drum 21 through the plurality of suction holes 21e in the radial direction dries the laundry held in the drum 21.

As has been described, the laundry treating apparatus of the present invention has one or more of the following advantages.

First, the improvement in the air suction structure to the inside of the drum and the air discharge structure from the inside of the drum permits to have an advantage of making the drum capacity the largest.

Second, the formation of the air suction holes in the circumferential surface of the drum permits to have an advantage of supplying the air to the inside of the drum, uniformly.

Third, the formation of the air discharge holes in the circumferential surface of the drum permits to have an advantage of discharging the air from the inside of the drum, uniformly.

Fourth, the arrangement of the filter at the lower side of the front supporter which supports the drum front portion permits to have an advantage of making the hole formed in the front supporter for in/out of the laundry to be the largest.

## Claims

1. A laundry treating apparatus (1) comprising:
a cabinet (10);
a drum (21) having an open front and rear rotatably provided in the cabinet (10) to hold laundry, the drum (21) including a drum front portion (21b) which is a front circumferential surface of the drum, a drum center portion (21a) holding the laundry, and a drum rear portion (21c) which is a rear circumferential surface of the drum, wherein the front portion (21b) includes a plurality of discharge holes (21d), and wherein the rear portion (21c) includes a plurality of suction holes (21e);
a front supporter (23) to support the front portion of the drum (21) and to surround the plurality of the discharge holes (21d); and
a rear supporter (25) to support the rear portion of the drum (21) and to surround the plurality of the suction holes (21e),
wherein the drum front portion (21b) couples to a front of the drum center portion (21a), and the drum rear portion (21c) couples to a rear of the drum center portion (21a),
**characterized in that** the drum front portion (21b) has a diameter smaller than a diameter of the drum center portion (21a), and the drum rear portion (21c) has a diameter smaller than the diameter of the drum center portion (21a).

2. The laundry treating apparatus (1) of claim 1, further comprising:
an air discharge duct (55) connected to the front supporter (23) to guide the air discharged from an inside of the drum (21) through the plurality of discharge holes (21d) and the front supporter (23).

3. The laundry treating apparatus (1) of claim 2, further comprising:
a fan (53) mounted in the air discharge duct (55) to move the air.

4. The laundry treating apparatus (1) of any of claims 1 to 3, further comprising:
a filter (61) detachably arranged to the front supporter (23) to filter (61) the air discharged from the inside of the drum (21) through the plurality of discharge holes (21d).

5. The laundry treating apparatus (1) of any of claims 1 to 4, further comprising:
an air suction duct (42) connected to the rear supporter (25) to guide the air being supplied to the inside of the drum (21) through the plurality of suction holes (21e).

6. The laundry treating apparatus (1) of claim 5, further comprising:
a heater (41) provided in the air suction duct (42) to heat the air.

7. The laundry treating apparatus (1) of any of claims 1 to 6, further comprising:
a ring shaped front sealer (73) located between the drum (21) and the front supporter (23) to provide a seal therebetween.

8. The laundry treating apparatus (1) of any of claims 1 to 7, further comprising:
a ring shaped rear sealer (73) located between the drum (21) and the rear supporter (25) to provide a seal therebetween.

9. The laundry treating apparatus (1) of any of claims 1 to 8, further comprising:
a belt (24) looped over the drum center portion (21a); and
a motor (45) to provide a rotation force to move the belt (24).

10. The laundry treating apparatus (1) of any of claims 1 to 9, wherein the front supporter (23) includes a front cover portion to surround the drum front portion (21b), and
wherein the front cover portion has a diameter larger than the diameter of the drum front portion (21b) and smaller than or the same as the diameter of the drum center portion (21a).

11. The laundry treating apparatus (1) of any of claims 1 to 10, wherein the front cover portion has a front hole formed therein to access the inside of the drum (21).

12. The laundry treating apparatus (1) of any of claims 1 to 11, wherein the rear supporter (25) includes a rear cover portion to surround the drum rear portion (21c), and
wherein the rear cover portion has a diameter larger than the diameter of the drum rear portion (21c) and smaller than or the same as the diameter of the drum center portion (21a).

## Patentansprüche

1. Wäschebehandlungsvorrichtung (1) mit:
einem Gehäuse (10);
einer Trommel (21) mit einer offenen Vorderseite und Rückseite, die drehbar im Gehäuse (10) vorgesehen ist, um Wäsche aufzunehmen, wobei die Trommel (21) einen vorderen Trommelabschnitt (21b), der eine vordere Umfangsfläche der Trommel ist, einen mittleren Trommelabschnitt (21a), der die Wäsche aufnimmt, und einen hinteren Trommelabschnitt (21c) aufweist, der eine hinteren Umfangsfläche der Trommel ist,
wobei der vordere Abschnitt (21b) mehrere Ausstoßlöcher (21d) aufweist, und wobei der hintere Abschnitt (21c) mehrere Ansauglöcher (21e) aufweist;
einer vorderen Halterung (23), um den vorderen Abschnitt der Trommel (21) zu halten und die mehreren Ausstoßlöcher (21d) zu umgeben; und
einer hinteren Halterung (25), um den hinteren Abschnitt der Trommel (21) zu halten und die mehreren Ansauglöcher (21e) zu umgeben,
wobei der vordere Trommelabschnitt (21b) mit einer Vorderseite des mittleren Trommelabschnitts (21a) gekoppelt ist, und der hintere Trommelabschnitt (21c) mit einer Rückseite des mittleren Trommelabschnitts (21a) gekoppelt ist,
**dadurch gekennzeichnet, dass** der vordere Trommelabschnitt (21b) einen Durchmesser aufweist, der kleiner als ein Durchmesser des mittleren Trommelabschnitts (21a) ist, und der hintere Trommelabschnitt (21c) einen Durchmesser aufweist, der kleiner als der Durchmesser des mittleren Trommelabschnitts (21a) ist.

2. Wäschebehandlungsvorrichtung (1) nach Anspruch 1, die ferner aufweist:
einen mit der vorderen Halterung (23) verbundenen Luftausstoßkanal (55), um die Luft zu leiten, die aus dem Inneren der Trommel (21) durch die mehreren Ausstoßlöcher (21d) und die vordere Halterung (23) ausgestoßen wird.

3. Wäschebehandlungsvorrichtung (1) nach Anspruch 2, die ferner aufweist:
einen im Luftausstoßkanal (55) angebrachten Ventilator (53), um die Luft zu bewegen.

4. Wäschebehandlungsvorrichtung (1) nach einem der Ansprüche 1 bis 3, die ferner aufweist:
ein Filter (61), das abnehmbar an der vorderen Halterung (23) angeordnet ist, um die aus dem Inneren der Trommel (21) durch die mehreren Ausstoßlöcher (21d) ausgestoßene Luft zu filtern (61).

5. Wäschebehandlungsvorrichtung (1) nach einem der Ansprüche 1 bis 4, die ferner aufweist:
einen mit der hinteren Halterung (25) verbundenen Luftansaugkanal (42), um die Luft zu leiten, die dem Inneren der Trommel (21) durch die mehreren Ansauglöcher (21e) zugeführt wird.

6. Wäschebehandlungsvorrichtung (1) nach Anspruch 5, die ferner aufweist:
eine im Luftansaugkanal (42) vorgesehene Heizvorrichtung (41), um die Luft zu erwärmen.

7. Wäschebehandlungsvorrichtung (1) nach einem der Ansprüche 1 bis 6, die ferner aufweist:
eine ringförmige vordere Dichtvorrichtung (73), die zwischen der Trommel (21) und der vorderen Halterung (23) angeordnet ist, um eine Dichtung dazwischen bereitzustellen.

8. Wäschebehandlungsvorrichtung (1) nach einem der Ansprüche 1 bis 7, die ferner aufweist:
eine ringförmige hintere Dichtvorrichtung (73), die zwischen der Trommel (21) und der hinteren Halterung (25) angeordnet ist, um eine Dichtung dazwischen bereitzustellen.

9. Wäschebehandlungsvorrichtung (1) nach einem der Ansprüche 1 bis 8, die ferner aufweist:
einen Riemen (24), der über den mittleren Trommelabschnitt (21a) geschlungen ist; und einen Motor (45), um eine Drehkraft bereitzustellen, um den Riemen (24) zu bewegen.

10. Wäschebehandlungsvorrichtung (1) nach einem der Ansprüche 1 bis 9, wobei die vordere Halterung (23) einen vorderen Abdeckabschnitt aufweist, der den vorderen Trommelabschnitt (21b) umgibt, und
wobei der vordere Abdeckabschnitt einen Durchmesser aufweist, der größer als der Durchmesser des vorderen Trommelabschnitts (21b) und kleiner oder gleich dem Durchmesser des mittleren Trommelabschnitts (21a) ist.

11. Wäschebehandlungsvorrichtung (1) nach einem der Ansprüche 1 bis 10, wobei der vordere Abdeckabschnitt ein darin ausgebildetes vorderes Loch aufweist, um auf das Innere der Trommel (21) zuzugreifen.

12. Wäschebehandlungsvorrichtung (1) nach einem der Ansprüche 1 bis 11, wobei die hintere Halterung (25) einen hinteren Abdeckabschnitt aufweist, der den hinteren Trommelabschnitt (21c) umgibt, und
wobei der hintere Abdeckabschnitt einen Durchmesser aufweist, der größer als der Durchmesser des hinteren Trommelabschnitts (21c) und kleiner oder gleich dem Durchmesser des mittleren Trommelabschnitts (21a) ist.

## Revendications

1. Machine à traiter le linge (1), comprenant :
une carrosserie (10) ;
un tambour (21) ouvert à l'avant et l'arrière, prévu dans la carrosserie (10) pour contenir le linge, ledit tambour (21) présentant une partie avant (21b) de tambour, qui est une surface circonférentielle avant du tambour, une partie centrale (21a) de tambour contenant le linge, et une partie arrière (21c) de tambour, qui est une surface circonférentielle arrière du tambour, la partie avant (21b) présentant une pluralité de trous de refoulement (21d), et où la partie arrière (21c) présentant une pluralité de trous d'aspiration (21e) ;
un support avant (23) destiné à supporter la partie avant du tambour (21) et à entourer la pluralité de trous de refoulement (21d) ; et
un support arrière (25) destiné à supporter la partie arrière du tambour (21) et à entourer la pluralité de trous d'aspiration (21e),
où la partie avant (21b) de tambour est raccordée à l'avant de la partie centrale (21a) de tambour, et la partie arrière (21c) de tambour est raccordée à l'arrière de la partie centrale (21a) de tambour,
**caractérisée en ce que** la partie avant (21b) de tambour a un diamètre inférieur au diamètre de la partie centrale (21a) de tambour, et la partie arrière (21c) de tambour a un diamètre inférieur au diamètre de la partie centrale (21a) de tambour.

2. Machine à traiter le linge (1) selon la revendication 1, comprenant en outre :
un conduit de refoulement d'air (55) raccordé au support avant (23) pour guider l'air refoulé de l'intérieur du tambour (21) par la pluralité de trous de refoulement (21d) et le support avant (23).

3. Machine à traiter le linge (1) selon la revendication 2, comprenant en outre :
un ventilateur (53) monté dans le conduit de refoulement d'air (55) pour déplacer l'air.

4. Machine à traiter le linge (1) selon l'une des revendications 1 à 3, comprenant en outre :
un filtre (61) disposé de manière amovible sur le support avant (23) pour filtrer (61) l'air refoulé du tambour (21) par la pluralité de trous de refoulement (21d).

5. Machine à traiter le linge (1) selon l'une des revendications 1 à 4, comprenant en outre :
un conduit d'aspiration d'air (42) raccordé au support arrière (25) pour guider l'air aspiré vers l'intérieur du tambour (21) par la pluralité de trous d'aspiration (21e).

6. Machine à traiter le linge (1) selon la revendication 5, comprenant en outre :
un élément chauffant (41) prévu dans le conduit d'aspiration d'air (42) pour chauffer l'air.

7. Machine à traiter le linge (1) selon l'une des revendications 1 à 6, comprenant en outre :
un joint annulaire avant (71) disposé entre le tambour (21) et le support avant (23) pour assurer une étanchéité entre ceux-ci.

8. Machine à traiter le linge (1) selon l'une des revendications 1 à 7, comprenant en outre :
un joint annulaire arrière (73) disposé entre le tambour (21) et le support arrière (25) pour assurer une étanchéité entre ceux-ci.

9. Machine à traiter le linge (1) selon l'une des revendications 1 à 8, comprenant en outre :
une courroie (24) passée autour de la partie centrale (21a) de tambour ; et un moteur (45) destiné à fournir une force de rotation pour mettre la courroie (24) en mouvement.

10. Machine à traiter le linge (1) selon l'une des revendications 1 à 9, où le support avant (23) comprend une partie de couvercle avant entourant la partie avant (21b) de tambour, et
où ladite partie de couvercle avant a un diamètre supérieur au diamètre de la partie avant (21b) de tambour et inférieur ou égal au diamètre de la partie centrale (21a) de tambour.

11. Machine à traiter le linge (1) selon l'une des revendications 1 à 10, où la partie de couvercle avant présente une ouverture avant qui y est formée pour accéder à l'intérieur du tambour (21).

12. Machine à traiter le linge (1) selon l'une des revendications 1 à 11, où le support arrière (25) comprend une partie de couvercle arrière entourant la partie arrière (21c) de tambour, et
où ladite partie de couvercle arrière a un diamètre supérieur au diamètre de la partie arrière (21c) de tambour et inférieur ou égal au diamètre de la partie centrale (21a) de tambour.
